# EUROPEAN PATENT SPECIFICATION

(11) **EP 2 459 001 B1**
(45) Date of publication and mention of the grant of the patent: **20.07.2016**
(21) Application number: 10740420.4
(22) Date of filing: 30.07.2010
(51) Int. Cl.: A23C 9/152, A23C 9/20, A23K 10/00, A23K 20/158, A23K 50/10, A23L 33/12

(54) **MILK COMPOSITION, USE THEREOF AND PRODUCTS BASED THEREON, FORMULATION TO BE FED TO MAMMALS, AND METHOD FOR PRODUCING SAID MILK COMPOSITION**
MILCHZUSAMMENSETZUNG, DEREN VERWENDUNG UND PRODUKTE DARAUF BASIEREND, NAHRUNGMITTELZUSAMMENSETZUNG FÜR MAMALIER UND PROZESS ZUR HERSTELLUNG DER GENANNTEN MILCHZUSAMMENSETZUNG
COMPOSITION À BASE DE LAIT, SON UTILISATION ET PRODUITS À BASE DE CELLE-CI, COMPOSITION ALIMENTAIRE POUR MAMMIFÈRES ET PROCÉDÉ DE PRODUCTION DE LADITE COMPOSITION À BASE DE LAIT

(30) Priority: 31.07.2009 NL 2003315
(43) Date of publication of application: 06.06.2012
(73) Proprietor: FrieslandCampina Nederland B.V., 3818 LE Amersfoort (NL)
(72) Inventor: HECK, Jeroen Margot Leon, NL-6708 SM Wageningen (NL)
(74) Representative: V.O.
(86) International application number: PCT/NL2010/050490
(87) International publication number: WO 2011/014069

(56) References cited:
- WO-A1-01/11978
- WO-A2-2008/066380
- DE-A1- 4 327 310
- US-A1- 2004 202 769
- LEIBER F; KREUZER M; NIGG D; WETTSTEIN H R; SCHEEDER M R L: "A study on the causes for the elevated n-3 fatty acids in cows' milk of alpine origin.", LIPIDS, vol. 40, no. 2, 2005, pages 191-202, XP002574367,
- AKRAIM F; NICOT M C; JUANEDA P; ENJALBERT F: "Conjugated linolenic acid (CLnA), conjugated linoleic acid (CLA) and other biohydrogenation intermediates in plasma and milk fat of cows fed raw or extruded", ANIMAL, vol. 1, no. 6, 2007, pages 835-843, XP002574368,
- Souci, Fachmann, Kraut: "Food composition and Nutrition Tables", 2000, Medpharm, Scientific Publishers, CRC Press, Stuttgart 6, XP002574418, page 12, table
- DOREAU M; LAVERROUX S; NORMAND J; CHESNEAU G; GLASSER F: "Effect of linseed fed as rolled seeds, extruded seeds or oil on fatty acid rumen metabolism and intestinal digestibility in cows", LIPIDS, vol. 44, no. 1, 1 January 2009 (2009-01-01), pages 53-62, XP002574370,
- GIVENS D I; KLIEM K E; GIBBS R A: "The role of meat as a source of n-3 polyunsaturated fatty acids in the human diet.", MEAT SCIENCE, vol. 74, no. 1, 2006, pages 209-218, XP002574369,
- PETIT H V; PALIN M F; DOEPEL L: "Hepatic lipid metabolism in transition dairy cows fed flaxseed.", JOURNAL OF DAIRY SCIENCE, vol. 90, no. 10, 2007, pages 4780-4792, XP002574371,
- SINCLAIR; COOPER L A; HUNTINGTON S L; WILKINSON J A; HALLETT R G; ENSER K G; WOOD M; J D: "In vitro biohydrogenation of n-3 polyunsaturated fatty acids protected against ruminal microbial metabolism", ANIMAL FEED SCIENCE AND TECHNOLOGY,, vol. 123-124, 2005, pages 579-596, XP005172280,
- "The effects of extruded flaxseed supplementation to high-yielding dairy cows on milk production and milk fatty acid composition", ANIMAL FEED SCIENCE AND TECHNOLOGY, vol. 152, no. 3-4, 17 May 2009 (2009-05-17), pages 232-242, XP026319591,
- HEGUY J M; JUCHEM S O; DEPETERS E J; ROSENBERG M; SANTOS J E P; TAYLOR S J: "Whey protein gel composites of soybean and linseed oils as a dietary method to modify the unsaturated fatty acid composition of milk lipids", ANIMAL FEED SCIENCE AND TECHNOLOGY,, vol. 131, 2006, pages 370-388, XP024934082,
- HAGEMEISTER H; PRECHT D; FRANZEN M; BARTH C A: "ALPHA LINOLENIC ACID TRANSFER INTO MILK FAT AND ITS ELONGATION BY COWS", FETT WISSENSCHAFT TECHNOLOGIE, vol. 93, no. 10, 1991, pages 387-391, XP008120634,

## Description

The present invention relates to a specific milk composition, and especially to a specific cows' milk composition. In addition, the invention relates to the use of this milk composition for the production of dairy based products and to the products produced for food and feed applications and for food and feed supplements. In a further aspect, the present invention relates to a formulation for milk producing animals and especially for dairy cattle and essentially for dairy cows; and to a method for producing said milk composition by milking said milk producing animals.

Animal milk and especially cows' milk forms an important source for foodstuffs intended for human consumption. Not only is animal milk *per* se consumed, but it is also an important ingredient or source of ingredients for other products intended for consumption. Animal milk contains a large number of different fatty acids. These different fatty acids have different effects on the health of human consumers.

In the prior art, it is described that milk compositions and especially the fatty acid composition thereof should be adapted with an aim to provide compositions which are healthier to human consumers.

For instance, in EP-A-1 106 077 a cows' milk composition is described having a total saturated fatty acid content of between 60.30 and 68.15 g/100 g total fatty acids, a total long-chain fatty (≥C₁₈) acid content between 40 and 51 g/100 g total fatty acids, a total monounsaturated fatty acid content between 28.68 and 39.20 g/100 g total fatty acids, a total polyunsaturated fatty acid amount between 3.15 and 4.65 g/100 g total fatty acid, the value of the ratio C_{16:0}/C_{18:0} cis is between 0.68 and 1.20, the value of the ratio ω-6/ω-3 is between 2.5 and 5, while in addition for various individualized fatty acids a weight range is given. According to the inventors of this European patent application, this milk composition has a preventive effect on cardiovascular diseases and cancerogenesis. This milk composition is obtained from cows fed on a food in extruded form comprising 50-99% linseed, and having a total fatty matter content between 23 and 30%.

Further, Lieber et al. describe in an article in Lipids 40(2) (2005) 191-202, the fatty acid profile of milk from cows fed alpine pasture. Said milk comprises 1.146 g ALA per 100 g total fatty acids, 57.39 saturated fatty acids / 100 g total fatty acids, 35.99 g C_{12:0} + C_{14:0} + C_{16:0} fatty acids / 100 g total fatty acids, and 1.34 g CLA / 100 g total fatty acids. The Atherogenicity Index AI (see herein-below for its definition) is calculated to be 1.4. No fat / protein ratios are given.

In Animal 1(6) (2007), 835-843, Akraim *et al.* describe the fatty acids profile of milk from cows fed diets supplemented linseed with 39.01 % ALA comprising 58.59 g saturated fatty acids / 100 g total fatty acids, 34.96 % C_{12:0} + C_{14:0} + C_{16:0} / 100 g total fatty acids, and an ω-6/ω-3 ratio of 1.35 and an AI calculated to be 1.35. No fat / protein ratios are given.

WO-01/11978 teaches a feed supplement for the production of milk fat enriched with C₁₈ ω-3 fatty acids by feeding lactating cows a mixture containing rumen protected linseed oil / soy bean lipid supplement.

In WO 2008/066380, a process is described for making powdered oils to protect poly unsaturated fatty acids (PUFA) from bio hydrogenation.

DE 43 27 310 discloses a composition rich in ω-3 PUFA as feed for cows. The ω-3 PUFA is protected from bio hydrogenation in the rumen by a protein emulsion and a component that causes the feed to pass quickly through the rumen.

One of the aims of the present invention is to provide a composition which is believed to be healthier for a large group of consumers.

As said, animal milk contains a large number of different fatty acids, and these different fatty acids have different effects on the health of human consumers. Although it is possible to adapt the fatty acids composition in dairy products by replacement of dairy fat with non dairy oils, such a replacement may lead to a number of problems including stability and taste problems. Stability problems, associated with non dairy oils being used to replace milk fat, are, e.g., related to a high amount of fat that is liquid at room temperature, and to a different melting behavior, making the fat unusable for many applications. Furthermore, the addition of oils containing a high amount of (poly)unsaturated fatty acids leads to oxidation of these (poly)unsaturated fatty acids in the end product. Additionally, taste problems occur associated with the source of the oils used for replacing milk fat, such as the presence of residual flavours caused by the addition of fish oils. Moreover, replacement of dairy fat results in a surplus of dairy fat that needs to be processed or discarded.

For the overall quality of the product, it is better to control the composition of milk by the food of the animal producing such a milk. The adaptation of a milk composition by feeding desired oils or fatty acids to a lactating animal is however not straight-forward in the sense that addition of a supplement to a feed for, for instance, a cow can result in an increase in the concentration of some beneficial fatty acid or acids in milk, but might have no or even a negative impact on the concentration of (other) beneficial fatty acids. Similarly, feeding a supplement can result in a decreased amount of some detrimental fatty acids, but also in no effect or even an increase in the amount of detrimental fatty acids. See, in this light, the article of Glasser et al. in J. Dairy Sc. 91 (2008), 4687-4703, studying the use of oilseed supplements in cow diets to alter the milk fatty acid (FA) composition and stating that "Responses were non-significant, linear or quadratic, depending on the FA studied and the supplement".

One of the reasons why it is very difficult to predict the effect of feed supplements on the fatty acid composition in the milk is that the animal has a large number of mechanisms to keep the fluidity of the milk fat within certain biological limit to be able to lactate. The fluidity is determined by the chain length, and the number, position and orientation (cis or trans) of the double bonds of the individual fatty acids but also by the stereospecific arrangement of the different fatty acids in the triglyceride molecule. The animal has a wide range of possibilities (desaturating of fatty acids, producing fatty acids with different chain lengths, or esterification on specific position in the triglyceride) to counter balance changes in individual fatty acids while remaining fluidity of milk fat as a whole.

Moreover, it is observed that feed supplements intended to alter the fatty acid composition in milk, may also influence and negatively affect the health of the animal, the milk production parameters and may even lead to environmental pollution caused by the animals consuming the feed supplement.

This makes that the production of a milk with an adapted fatty acid composition in a sustainable way, requires the combination of feed supplements that also take into account the effects on the animal's, and especially the cow's health.

It was now found that a healthy milk, and even a milk with health improvements relative to "natural" animal milk (that is, milk from animals that do not receive any specific feed supplements) but also relative to the milk composition described in EP-A-1 106 077, can be obtained with specific requirements to the fatty acid composition, while in addition said milk can easily be produced by an animal, without negatively affecting the animal's health.

In a first aspect, the present invention therefore relates to a fatty acids comprising milk composition, having a total amount of saturated fatty acids of between 55.0 and 67.0 grams, preferably between 57.00 and 64 grams, per 100 grams total fatty acids, wherein the weight ratio ω-6/ω-3 fatty acids is between 0.1 and 2.0, the content of C_{18:3}-cis 9,12,15 is between 1.0 and 8.0 g/100 g total fatty acids, and wherein the weight ratio fat/protein is between 1.05 and 1.45.

The identity and amount of the various fatty acids can be easily determined using conventional gas chromatography techniques. Particularly, the following method is used by the present inventors: milk fat is extracted from milk samples. Fatty acid methyl esters were prepared from fat fractions as described in ISO Standard 15884 (ISO-IDF 2002b). The methyl esters were analyzed according to ISO Standard 15885 (ISO-IDF 2002a) on a Trace GC Ultra chromatograph (Thermo Electron Corporation), using a Varian Fame Select column (100 m x 0.25 mm ID; Varian Inc.). The initial temperature was held at 70°C for 1 minute and raised to 225°C at 3°C/min and held at 225°C for 5 minutes. A volume of 1µl was injected. Each peak was identified and quantified using pure methyl ester samples (Sigma-Aldrich; Larodan). The fatty acids were expressed as a portion of total fat weigth.

As to the fat/protein ratio, it is noted that this weight ratio is the wt.% fat divided by the protein weight percentage in milk, wherein the protein equals the sum of the true protein content and the non-protein nitrogen (N*6.38, as according to the Kjeldahl method). The fat and protein percentages and the concentration of urea were determined by infrared spectroscopy using a MilkoScan FT6000 (Foss Electric).

The milk composition can be a milk originating from lactating animals, and especially of dairy cattle such as dairy cows.

The fat/protein ratio in milk is an indicator for milk fat depression and a negative energy balance, which are metabolic disorders in a lactating animal, and especially in a cow. Milk fat depression is a major problem caused by feeding too much unprotected oils to lactating animals. By keeping the fat/protein ratio in milk between 1.05 and 1.45 and preferably between 1.15 and 1.30, the milk composition is obtained from a healthy lactating animal.

Roughly, more than 70 wt.% of the fatty acids in natural cows' milk are saturated, and hence less than 30 wt.% of the fatty acids are formed by mono- and poly-unsaturated fatty acids. The milk composition of the present invention has a considerably lower amount of saturated fatty acids, which has a good effect on the quality of the blood lipids and a corresponding positive effect against cholesterol related diseases and other cardiovascular diseases. In the present description and the claims, "saturated fatty acids" is the sum of C_{4:0} + C_{5:0} + C_{6:0} + C_{7:0} + C_{8:0} + C_{9:0} + C_{10:0} + C_{11:0} + C_{12:0} + C_{13:0} + C_{14:0} + C_{14:0} iso + C_{15:0} + C_{15:0} iso + C_{15:0} ante iso + C_{16:0} + C_{16:0} iso + C_{17:0} + C_{17:0} iso + C_{17:0} ante iso + C_{18:0} + C_{20:0}.

In a preferred embodiment, the total amount of saturated fatty acids is between 59.0 and 64.0, more preferably about 60-62 grams per 100 grams total fatty acids.

The milk composition has a weight ratio ω-6/ω-3 fatty acids between 0.1 and 2.0. The term "ω-3 fatty acids" is, in the present description and the appending claims, the sum of C_{18:3} cis 9,12,15 (ALA) + C_{20:5} cis 5,8,11,14,17 (EPA) + C_{22:5} cis 7,10,13,16,19 (DPA) + C_{22:6} cis 4,7,10,13,16,19 (DHA), the term "ω-6 fatty acids" the sum of C_{18:2} cis 9,12 + C_{22:2} cis 13,16.

When in a composition the amount of ω-6 fatty acids, relative to the amount ω-3 fatty acids, is such that the weight ratio of ω-6/ω-3 fatty acids is higher than 2, such a composition may promote the pathogenesis of many diseases including cardiovascular diseases, cancer, inflammatory diseases and autoimmune diseases. In a preferred embodiment, the weight ratio of ω-6/ω-3 fatty acids is between 1.0 and 1.5.

As said, the content of the ω-3 fatty acid C_{18:3}-cis 9,12,15 is between 1.0 and 8.0 g/100 g total fatty acids in the milk composition of the present invention, preferably between 1.2 and 4.0, and most preferably between 1.4 and 2.0, such as about 1.5.

In a further preferred embodiment, the milk composition according to the invention contains Conjugated Linoleic Acid (CLA; C_{18:2} trans 11 cis 9) preferentially is an amount of between 0.5 and 4.0 g/100 g total fatty acids, more preferably between 0.6 and 2.5, most preferably between 0.7 and 1.0 g/100 g total fatty acids. CLA is known to have an anti-carcinogenic effect.

Trans fatty acids are not considered particularly healthy and the content of these fatty acids (the sum of C_{16:1} trans 9 + C_{18:1} trans (4+5+6+7+8) + C_{18:1} trans 9 + C_{18:1} trans 10 + C_{18:1} trans 11) is preferably low; that is less than 8 g/100 g total fatty acids, more preferably less than 5 g/100 g total fatty acids.

The only exception is C_{18:1} trans 11. This trans fatty acid may be present in an amount up to 4 g/100 g total fatty acid; preferably between 1 and 3, more preferably between 1.2 and 1.9 g/100 g total fatty acids. This fatty acid can be converted in the human body to C_{18:2} cis 9, trans 11, (CLA).

In yet a further preferred embodiment, the milk composition has a combined content of the fatty acids C_{12:0}, C_{14:0} and C_{16:0} between 26.8 and 41.9 g/100 g total fatty acids. The content preferentially of C_{12:0} is between 1.8 and 3.4 g/100 g total fatty acid, preferably between 2.0 and 2.9 g /100 g total fatty acid. The content of C_{14:0} is preferably between 7.0 and 10.5 g/100 g total fatty acid, more preferably between 8.0 and 9.5 g/100 g total fatty acid. The content C_{16:0} is preferably between 18.0 and 28.0 g/100 g total fatty acid, more preferably between 19.0 and 25.0 g/100 g total fatty acid.

Preferably, the milk composition of the present invention has an Atherogenic Index (AI) between 1 and 2.3; more preferably between 1.4 and 1.8, such as about 1.6. The AI index is defined as follows
(the sum of the proportion in wt.% of C_{12:0} + C_{16:0} + 4*C_{14:0} in the fat) divided by (the proportion of total unsaturated fats); wherein the proportion of unsaturated fatty acids equals (100% - the proportion of saturated fatty acids). This index is a dietary risk indicator for cardiovascular diseases and is described in more detail by Bobe et al. in J. Dairy Sc. 86 (2003), 3122-3127 and by Ulbricht and Southgate in The Lancet 338 (1991), 985-992.

C_{18:1} cis 9 (oleic acid) is an unsaturated ω-9 fatty acid that does not disturb the ω-6/ω-3 weight ratio). Preferably the content of C_{18:1} cis 9 is between 16.0 and 29.0 g/100 g total fatty acid.

C_{4:0} (butyrate), a fatty acid associated with anti carcinogenic effects, is preferably present in an amount between 3.0 and 4.3 g/100 g total fatty acid.

A number of fatty acids may be present in the milk composition of the present invention without having a particular beneficial effect nor having any adverse effect. To this group of fatty acids, the following fatty acids belong: C_{6:0}; C_{8:0}; C_{10:0}; and C_{18:0}.

In a further aspect, the present invention relates to the use of the milk composition of the invention for the preparation of a dairy based composition, such as a cheese, a yoghourt, a cream composition, a dessert product and so on. Furthermore, the invention relates to the products produced using the milk composition, and especially those products wherein the fatty acid composition of the milk composition is essentially maintained in the final product. These products are for instance suitable for food and feed applications or for food and feed supplements.

The milk composition according to the present invention can for instance be obtained by adding particular components to a base roughage and/or base concentrate. This base roughage can consist of maize silage and grass silage. The base concentrate can be any type of concentrate and is a conventional feedstuff having a dry matter content higher than 80 wt.% and a crude fat content lower than 10%. Grass and maize silage are typical components of a winter diet for Dutch cows. The ratio of maize silage to grass silage is important because maize mainly contains ω-6 fatty acids (C_{18:2} cis 9,12) while grass mainly contains ω-3 fatty acids (C_{18:3} cis 9,12,15). Feeding a cow too much maize compared to grass will result in a higher (negative for human health) ω-6 to ω-3 ratio in the milk. In the summer fresh grass will be the main roughage of Dutch cows. Fresh grass contains more ω-3 fatty acids than grass silage. In the summer the combination of supplements described will be added to a diet that contains fresh grass as the main roughage. These supplements (and the roughage) are exemplified in the following table A:

**Table A**

| **Component** | **kg dry matter (DM)** | **fat % (gram crude fat/100gram DM)** | **kg fat intake per day per animal** |
|---|---|---|---|
| *Roughage* | | | |
| Grass silage | 12 | 4.1 | 0.5 |
| Maize silage | 4 | 3.5 | 0.1 |
| | | | |
| Concentrate | 5 | 3.1 | 0.2 |
| | | | |
| Supplements | | | |
| (1)unprotected oil | 0.2 | 100 | 0.2 |
| (2)protected oil | 0.15 | 66 | 0.1 |
| (3)completely hydrogenated fat | 0.2 | 100 | 0.2 |
| | | | |
| Total | 21.6 | 6.0% | 1.3 |

(1) Unprotected oil: oil of any type that consist of >30% C_{18:3} cis 9,12,15 (ALA) (*e.g.* linseed oil). Suitable supplements are described in, e.g. EP-A-1 106 077. This oil is not protected to rumen biohydrogenation.
(2) Rumen protected oil feed supplement containing oil that is encapsulated or otherwise incorporated in a matrix material preferably based on protein; this encapsulated supplement contains >50% oil and this oil consist of > 30% C_{18:3} cis 9, 12, 15, and the protection is such that less than 50 wt.% of the C_{18:3} cis 9, 12, 15 incorporated therein is converted in the area between the mouth and duodenum of the ruminant. This rumen protected supplement is prepared by *e.g.* the method described in EP-A-1 925 211.
(3) Completely hydrogenated fat. Completely hydrogenated oil that after hydrogenation contains >60% C_{18:0} (stearic acid) and < 5 % unsaturated fatty acids; for example completely hydrogenated rapeseed oil, soybean oil, lineseed oil, sunflower oil.

The feed in this invention is composed of a base roughage, base concentrate and specific combination of supplements. A combination of supplements in which, on a fat base, between 50% and 80% is delivered by (1) unprotected oil that consists of >30% C_{18:3} cis 9,12, 15; and between 20% and 50% (2) protected oil that consists of >30% C_{18:3} cis 9,12, 15.

In yet a further preferred embodiment the combination of supplements, on a fat base may comprise between 20% - 90% (1) unprotected oil that consists of >30% C_{18:3} cis 9,12, 15; and between 10% and 80% (2) protected oil that consists of >30% C_{18:3} cis 9,12, 15 and between 10% and 80% (3) completely hydrogenated fat that contains >60% C_{18:0} and < 5 % unsaturated fatty acids. More preferably the combination of supplements, on a fat base consists of between 30% - 70% of (1) unprotected oil that consists of >30% C_{18:3} cis 9,12, 15, between 20% and 50% of (2) protected oil that consists of >30% C_{18:3} cis 9,12, 15 and between 30% and 70% of (3) completely hydrogenated fat that contains >60% C_{18:0} and < 5 % unsaturated fatty acids.

The milk composition obtained as a result of feeding the combination of supplements in the quantities as stated in Table A differs for individual cows and changes during the season. The fatty acid composition is also determined by the health status, lactation stage, parity and genetic background of the cow. Furthermore, the composition and quantity of the fatty acids supplied by the diet is, in addition to the supplements also depending on the fatty acid composition and fat % of the other components in the diet of the cow (*e.g.,* the roughage or the concentrate).

As said, especially the composition of the roughage varies greatly during the season. With the information provided the skilled person will however be able to prepare the milk composition according to the invention. In yet a further aspect, the present hence invention relates to a formulation for lactating animals and preferably for dairy cows, based on a conventional roughage; said feed formulation comprising in the fatty phase 20-90 wt.%, preferably 50-80 wt.% (drawn to the fatty phase) native fat comprising at least 30 wt.% C_{18:3} cis 9, 12, 15; and 80-10 wt.%, preferably 50-20 wt.% rumen-protected fat, comprising at least 30 wt.% C_{18:3} cis 9, 12, 15.

Such formulations are generally prepared by adding the essential supplements, optionally in the form of rumen protected compositions, to a conventional base composition. Such a base composition may for instance be silage, and especially a grass silage or a maize silage, yet other suitable base compositions can equally well be used. Preferably, the formulation also contains added minerals and vitamins, and especially added selenium. Preferably, 0.2 mg/kgDM (dry matter) organic selenium is added to the formulation of the invention and to the composition illustrated in table A. In addition to the level of selenium added, the selenium concentration is also depending on the selenium concentration already present in the other feed components. Organic selenium is partly incorporated in the milk proteins. A higher selenium concentration in dairy products is positive for human health. Furthermore, addition of selenium preferably in combination with vitamin E is beneficial for the oxidative stability of the feed stuff and the milk. This is especially important when the amounts of unsaturated fatty acids are raised, as for the milk according to the invention. Moreover selenium and Vitamin E are important for the cow's health.

Preferably, the selenium content in the milk is between 1.8 and 6.1 µg/100g milk.

The three types of feed supplements used in the present invention will now be discussed:
1) Rumen protected supplements are used to prevent biohydrogenation in the rumen. In this technique a (generally purified) oil is encapsulated, for example with protein. An example is described in EP-A-1 925 211. Advantages of this technique are that an increase in specific fatty acids (*e.g.* ω-3 or ω-6), no or only a limited increase in trans fatty acids, and a small decrease in C_{12:0}/C_{14:0}/C_{16:0} can be obtained.
2) Non rumen protected supplements have as an important advantage that CLA will be formed and the biohydrogenation intermediates will inhibit the *de novo* synthesis of fatty acids in the cow. The *de novo* synthesized fatty acids are saturated fatty acids (C_{4:0}-C_{16:0}). The oils supplemented in this way are not protected to biohydrogenation which leads to a large decrease in C_{12:0}/C_{14:0}/C_{16:0}, to a small increase in polyunsaturated fatty acids, and to a considerable increase in CLA.
3) Hardened fats are completely hydrogenated fats that only contain saturated fatty acids. They are a good source of energy for the cow because saturated fat is not used by rumen bacteria and does not disturb rumen bacteria metabolism. The addition of saturated fats to the diet of cows will result in an increase of these saturated fatty acids in the milk. However the cow is capable of desaturating saturated fatty acids to delta 9 unsaturated fatty acids by the stearoyl-CoA desaturase (SCD) enzyme, which catalyzes the insertion of a double bond between carbon atoms 9 and 10 of a fatty acid. The extent to which fatty acids are unsaturated by this enzyme depends on the chain length of the fatty acids. For most fatty acids this unsaturation of the saturated precursor is below 50 % indicating that addition of such fatty acids to the diet will result in an increase of the total amount of saturated fat in the milk. However, for C_{18:0} the SCD enzyme desaturates more than 50% of the saturated C_{18:0} to C_{18:1} cis 9. This indicates that addition of saturated C_{18:0} to the milk will result in an increase in the amount of unsaturated fat in the milk. Completely hydrogenated oils that contain mainly C₁₈ fatty acids before hydrogenation are a good source of C_{18:0}. Hardened oil containing mainly C_{18:0} is a good fat source to increase C_{18:1} cis 9 in milk because C_{18:1} is partly saturated to C_{18:1} cis 9 in the mammary gland.

Stearic acid (C_{18:0}), a solid fat at room temperature, can be grinded and fed, mixed with other feed stuff in the ration. Alternatively, stearic acid can be melted and used to coat other feed stuff in the ration. Coating other feed stuff might help to rumen protect these other feed stuff.

In yet a further preferred embodiment, the formulation of the invention contains added selenium. This selenium is partly incorporated in milk proteins and excreted in the milk. A higher selenium level in the milk is good for human health, but also important for the cow's health. Selenium is an antioxidant preventing oxidation of polyunsaturated fatty acids in the milk and in the feed supplement.

A milk composition obtained by milking cows fed with the food composition described in Table A is given in Table B:

**Table B:**

| Fatty acid | minimum | maximum | average |
|---|---|---|---|
| C4:0 | 3.0 | 4.3 | 3.5 |
| C6:0 | 1.5 | 2.5 | 2.0 |
| C8:0 | 0.7 | 1.5 | 1.0 |
| C10:0 | 1.6 | 4.0 | 2.5 |
| C12:0 | 1.8 | 3.4 | 2.8 |
| C14:0 | 7.0 | 10.5 | 9.2 |
| C16:0 | 18.0 | 28.0 | 22.3 |
| C18:0 | 10.0 | 20.0 | 15.8 |
| | | | |
| Saturated | 55.0 | 67.0 | 60.9 |
| | | | |
| C18:3 cis 9,12,15 (omega 3) | 1.0 | 8.0 | 1.9 |
| Ratio omega6/omega3 | 0.1 | 2.0 | 1.5 |
| | | | |
| A1 index | 1 | 2.3 | 1.6 |
| | | | |
| C16:1 trans 9 | 0.05 | 0.5 | 0.28 |
| C18:1 trans 4+5+6+7+8 | 0.20 | 1.0 | 0.45 |
| C18:1 trans 9 | 0.1 | 0.5 | 0.28 |
| C18:1 trans 10 | 0.2 | 2 | 0.61 |
| C18:1 trans 11 | 1 | 4 | 1.7 |
| Total trans | 1.2 | 8 | 3.4 |
| C18:1 cis 9 | 16 | 29 | 23.2 |
| C18:2 cis 9, trans 11 (CLA) | 0.5 | 4 | 0.72 |
| Mono unsaturated fatty acids total | 26.6 | 39.5 | 30.1 |
| Poly unsaturated fatty acids total | 3 | 12 | 4 |
| Fat % | 3 | 5 | 4.22 |
| protein % | 2.5 | 4 | 3.43 |
| Lactose % | 4.3 | 4.9 | 4.53 |
| Ratio fat/protein | 1.05 | 1.45 | 1.23 |
| Urea mg/100g milk | 5 | 35 | 21 |
| Selenium µg/100 g milk | 1.8 | 6.1 | 2.5 |

This milk composition has an increased amount of ω-3 fatty acids, CLA, oleic acid and preferably also of the mineral selenium that is also preferably added to the roughage. It has a lower content of saturated acids (compared to regular cows' milk) and especially a lower amount of those saturated fatty acids referred to in the AI (C_{12:0}, C_{14:0} and C_{16:0}). The increase of trans fatty acids is rather limited and is primarily an increase of C_{18:1} trans 11. The food does neither give the animal a negative energy balance nor a milk fat depression. The urea content in the milk composition of the invention is reduced, preferably to an amount in the range of 5-35 mg/100 g milk, and so is the nitrogen excretion in the urine.

In the last aspect, the present invention relates to a process for producing a milk composition according to the invention, comprising feeding a lactating animal, and preferable a cow, with a formulation of the invention, followed by milking said animal.

## Claims

1. Fatty acids comprising milk composition, preferably a fatty acids comprising cow milk composition, having a total content of saturated fatty acids of between 55.0 and 67.0 grams per 100 grams total fatty acids, wherein the weight ratio ω-6/ω-3 fatty acids is between 0.1 and 2.0, the content of C_{18:3}-cis 9,12,15 is between 1.0 and 8.0 g/100 g total fatty acids, and wherein the weight ratio fat/protein is between 1.05 and 1.45.

2. The milk composition according to claim 1, wherein the content of C_{18:2}-cis 9, trans 11 is between 0.5 and 4 g/100 g total fatty acids.

3. The milk composition according to claim 1 or 2, wherein the combined content of the fatty acids C_{12:0}, C_{14:0} en C_{16:0} is between 26.8 and 41.9 g/100 g total fatty acids.

4. The milk composition according to any of the preceding claims, wherein the Atherogenic Index AI is between 1 and 2.3.

5. The milk composition according to any of the preceding claims having a selenium content between 1.8 and 6.1 µg atomic Se per 100 g milk.

6. Use of the milk composition according to any of the preceding claims for the production of a dairy based product.

7. Product based on the milk composition according to any of claims 1-5 or obtainable by the use of claim 6, having essentially the same fatty acid composition as the milk composition.

8. Formulation for lactating animals, preferably dairy cows, based on a conventional roughage and further comprising supplements, said supplements comprising in the fatty phase 50-80 wt.% native fat comprising at least 30 wt.% C_{18:3} cis 9,12,15; and 50-20 wt.% rumen-protected fat, comprising at least 30 wt.%, C_{18:3} cis 9,12,15.

9. Formulation according to claim 8, comprising added minerals, preferably added selenium.

10. Method to produce a milk composition according to any of the claims 1-5 comprising feeding a lactating animal with the formulation according claim 8 or 9, followed by milking said animal.

## Patentansprüche

1. Fettsäuren umfassende Milchzusammensetzung, bevorzugt eine Fettsäuren umfassende Kuhmilchzusammensetzung mit einem Gesamtgehalt von gesättigten Fettsäuren zwischen 55,0 und 67,0 Gramm pro 100 Gramm Gesamtfettsäuren, wobei das Gewichtsverhältnis ω-6/ ω-3 Fettsäuren zwischen 0,1 und 2,0 liegt, der Gehalt an C_{18:3}-cis 9,12,15 zwischen 1,0 und 8,0 g/100 g Gesamtfettsäuren beträgt und wobei das Gewichtsverhältnis Fett/Protein zwischen 1,05 und 1,45 liegt.

2. Milchzusammensetzung nach Anspruch 1, wobei der Gehalt von C_{18:2}-cis 9, trans 11 zwischen 0,5 und 4 g/100 g Gesamtfettsäuren beträgt.

3. Milchzusammensetzung nach Anspruch 1 oder 2, wobei der kombinierte Gehalt der Fettsäuren C_{12:0}, C_{14:0} und C_{16:0} zwischen 26,8 und 41,9 g/100 g Gesamtfettsäuren beträgt.

4. Milchzusammensetzung nach einem der vorhergehenden Ansprüche, wobei der atherogene Index AI zwischen 1 und 2,3 liegt.

5. Milchzusammensetzung nach einem der vorhergehenden Ansprüche, mit einem Seleniumgehalt zwischen 1,8 und 6,1 µg atomaren Se pro 100 g Milch.

6. Verwendung der Milchzusammensetzung nach einem der vorhergehenden Ansprüche zur Herstellung eines Produkts auf Milchbasis.

7. Produkt auf Basis der Milchzusammensetzung nach einem der Ansprüche 1-5 oder erhältlich durch die Verwendung von Anspruch 6, mit im Wesentlichen derselben Fettsäurezusammensetzung wie die Milchzusammensetzung.

8. Rezeptur für laktierende Tiere, bevorzugt Milchkühe, basierend auf einem herkömmlichen Raufutter und ferner umfassend Zusätze, die in der Fettphase 50-80 Gew.-% natives Fett umfassen, umfassend mindestens 30 Gew.-% C_{18:3} cis 9,12,15; und 50-20 Gew.-% pansengeschütztes Fett, umfassend mindestens 30 Gew.-% C_{18:3} cis 9,12,15.

9. Rezeptur nach Anspruch 8, umfassend zugesetzte Mineralstoffe, bevorzugt zugesetztes Selenium.

10. Verfahren zur Herstellung einer Milchzusammensetzung nach einem der Ansprüche 1-5, umfassend das Füttern eines laktierenden Tieres mit der Rezeptur nach Anspruch 8 oder 9 und anschließendes Melken des Tieres.

## Revendications

1. Composition de lait comprenant des acides gras, qui est de préférence une composition de lait de vaches comprenant des acides gras, qui présente une teneur totale en acides gras saturés d'entre 55,0 et 67,0 grammes pour 100 grammes au total d'acides gras, et dans laquelle le rapport pondéral d'acides gras ω-6/ω-3 vaut entre 0,1 et 2,0, la teneur en acide C_{18:3}-cis-9,12,15 vaut entre 1,0 et 8,0 g pour 100 g au total d'acides gras, et le rapport pondéral des matières grasses aux protéines vaut entre 1,05 et 1,45.

2. Composition de lait conforme à la revendication 1, dans laquelle la teneur en acide C_{18:2}-cis-9,trans-11 vaut entre 0,5 et 4 g pour 100 g au total d'acides gras.

3. Composition de lait conforme à la revendication 1 ou 2, dans laquelle la teneur combinée en les acides gras C_{12:0}, C_{14:0} et C_{16:0} vaut entre 26,8 et 41,9 g pour 100 g au total d'acides gras.

4. Composition de lait conforme à l'une des revendications précédentes, dont l'indice d'athérogénicité IA vaut entre 1 et 2,3.

5. Composition de lait conforme à l'une des revendications précédentes, qui présente une teneur en sélénium valant entre 1,8 et 6,1 µg de sélénium, à l'état atomique, pour 100 g de lait.

6. Utilisation d'une composition de lait, conforme à l'une des revendications précédentes, pour la production d'un produit à base de lait.

7. Produit à base d'une composition de lait, conforme à l'une des revendications 1 à 5, ou accessible selon l'utilisation de la revendication 6, présentant pratiquement la même composition en acides gras que la composition de lait.

8. Formulation pour animaux en lactation, de préférence des vaches laitières, à base d'un fourrage grossier classique et comprenant en outre des compléments, lesquels compléments comprennent, dans la phase de matières grasses, 50 à 80 % en poids de matières grasses naturelles comprenant au moins 30 % en poids d'acide C_{18:3}-cis-9,12,15, et 50 à 20 % en poids de matières grasses protégées dans le rumen, comprenant au moins 30 % en poids d'acide C_{18:3}-cis-9,12,15.

9. Formulation conforme à la revendication 8, comprenant des éléments minéraux ajoutés, de préférence du sélénium ajouté.

10. Procédé de production d'une composition de lait conforme à l'une des revendications 1 à 5, comportant le fait de nourrir un animal en lactation avec une formulation conforme à la revendication 8 ou 9, et le fait de traire ensuite cet animal.
